# FASCICULE DE BREVET EUROPEEN

(11) **EP 2 499 088 B1**
(45) Date de publication et mention de la délivrance du brevet: **26.03.2014**
(21) Numéro de dépôt: 10776993.7
(22) Date de dépôt: 10.11.2010
(51) Int. Cl.: C01B 3/00, F17C 11/00

(54) **RESERVOIR DE STOCKAGE D'HYDROGENE A HYDRURES METALLIQUES**
WASSERSTOFFSPEICHERTANK MIT METALLHYDRIDEN
HYDROGEN STORAGE TANK HAVING METAL HYDRIDES

(30) Priorité: 13.11.2009 FR 0958021
(43) Date de publication de la demande: 19.09.2012
(73) Titulaire: Commissariat à l'Énergie Atomique et aux Énergies Alternatives, 75015 Paris (FR)
(72) Inventeur: GILLIA, Olivier, F-38360 Sassenage (FR); CHAISE, Albin, F-38000 Grenoble (FR); ELIE, Manon, F-31000 Grenoble (FR); PLANQUE, Michel, F-38180 Seyssins (FR)
(74) Mandataire: Ilgart, Jean-Christophe
(86) Numéro de dépôt international: PCT/EP2010/067205
(87) Numéro de publication internationale: WO 2011/058053

(56) Documents cités:
- EP-A2- 0 188 996
- EP-A2- 1 454 875
- WO-A1-2007/124825
- FR-A1- 2 508 596
- US-A- 4 436 537
- US-A1- 2002 134 370
- US-A1- 2004 129 048
- US-A1- 2004 178 083
- US-A1- 2006 266 219
- US-A1- 2009 000 963

## Description

### DOMAINE TECHNIQUE ET ART ANTÉRIEUR

La présente invention se rapporte à un réservoir de stockage d'hydrogène sous la forme d'hydrures métalliques.

On cherche des énergies alternatives aux pétroles du fait, notamment, de la réduction des réserves de pétrole. Un des vecteurs prometteurs pour ces sources d'énergie est l'hydrogène, qui peut être utilisé dans les piles à combustible pour produire de l'électricité.

L'hydrogène est un élément très répandu dans l'univers et sur la Terre, il peut être produit à partir du charbon, du gaz naturel ou d'autres hydrocarbures, mais aussi par simple électrolyse de l'eau en utilisant par exemple l'électricité produite par l'énergie solaire ou éolienne.

Les piles à hydrogène sont déjà utilisées dans certaines applications, par exemple dans des véhicules automobiles mais sont encore peu répandues, notamment du fait des précautions à prendre et des difficultés pour le stockage de l'hydrogène.

L'hydrogène peut être stocké sous forme d'hydrogène comprimé entre 350 et 700 bars, ce qui pose des problèmes de sécurité. Il faut alors prévoir des réservoirs aptes à tenir ces pressions, sachant par ailleurs que ces réservoirs, lorsqu'ils sont montés dans des véhicules, peuvent être soumis à des chocs.

Il peut être stocké sous forme liquide, cependant ce stockage n'assure qu'un faible rendement de stockage et ne permet pas le stockage sur de longue durée. Le passage d'un volume d'hydrogène de l'état liquide à l'état gazeux dans les conditions normales de pression et de température produit un accroissement de son volume d'un facteur d'environ 800. Les réservoirs , d'hydrogène sous forme liquide ne sont en général pas très résistants aux chocs mécaniques, cela pose d'importants problèmes de sécurité.

Il existe également le stockage d'hydrogène dit « solide » sous la forme d'hydrure. Ce stockage autorise une densité volumique de stockage importante et met en oeuvre une pression modérée d'hydrogène tout en minimisant l'impact énergétique du stockage sur le rendement global de la chaine hydrogène, i.e. de sa production à sa conversion en une autre énergie

Le principe du stockage solide de l'hydrogène sous forme d'hydrure est le suivant : certains matériaux et en particulier certains métaux possèdent la capacité d'absorber l'hydrogène pour former un hydrure, cette réaction est appelée absorption. L'hydrure formé peut à nouveau donner de l'hydrogène gazeux et un métal. Cette réaction est appelée désorption. L'absorption ou la désorption interviennent en fonction de la pression partielle d'hydrogène et la température.

L'absorption et la désorption de l'hydrogène sur une poudre ou une matrice métallique M se font selon la réaction suivante : 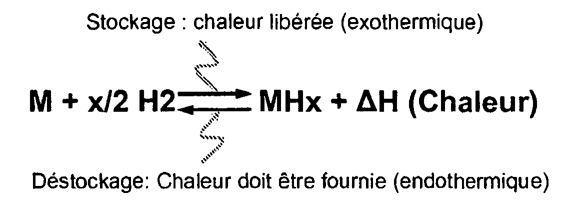
- M étant la poudre ou matrice métallique,
- MHx étant l'hydrure métallique.

On utilise par exemple une poudre métallique que l'on met en contact avec de l'hydrogène, un phénomène d'absorption apparaît et un hydrure métallique se forme. La libération de l'hydrogène s'effectue selon un mécanisme de désorption.

Le stockage de l'hydrogène est une réaction exothermique, i.e. qui dégage de la chaleur, alors que la libération de l'hydrogène est une réaction endothermique, i.e. qui absorbe de la chaleur.

On cherche notamment à avoir un chargement rapide de la poudre métallique en hydrogène. Pour obtenir un tel chargement rapide, il faut évacuer la chaleur produite lors de ce chargement pour éviter de freiner l'absorption de l'hydrogène sur la poudre ou la matrice métallique. Lors du déchargement en hydrogène, de la chaleur est apportée. Par conséquent, l'efficacité du refroidissement et du réchauffement conditionne les débits de chargement et de déchargement.

De façon quasi-systématique, l'hydrure et le métal, qui se présentent tous deux sous forme de poudre dans les réservoirs, ont une différence de densité comprise entre 10 % à 30 %.

Cette variation de densité au sein du réservoir a deux conséquences :
- d'une part l'apparition de contraintes à l'intérieur des grains de poudre lors des cycles d'absorption-désorption, ce qui provoque leur fractionnement en plus petits grains. Ce phénomène est appelé décrépitation.
- d'autre part le gonflement des grains de poudre au cours de l'absorption d'hydrogène et le dégonflement des grains lors de la désorption. Un volume libre au-dessus de la poudre est alors prévu pour tenir compte de se gonflement.

Le phénomène de décrépitation et le phénomène de gonflement sont responsables d'une densification progressive du lit de poudre à mesure que le nombre de cycles d'absorption-désorption croît. En effet, la décrépitation fait apparaître des poudres de plus en plus fines qui migrent par gravité vers le fond du réservoir à travers le réseau de grains. De plus, lorsque la vitesse du flux d'hydrogène est suffisamment importante, les grains sont déplacés et réarrangés dans le réservoir. Par ailleurs, le lit de poudre tend à se rétracter, i.e. à voir son volume diminuer lors d'une désorption ce qui laisse un espace vide entre les parois du réservoir et le lit du matériau de stockage de l'hydrogène. Une migration des poudres intervient par gravité via cet espace et le comble. Lors de l'absorption suivante, la poudre d'hydrure formée ne va pas se comporter comme un fluide. En particulier, le niveau du lit de poudre dans le réservoir n'est pas celui atteint lors de l'absorption précédente. En effet les frottements des grains entre eux et contre la paroi du réservoir empêchent le lit de poudre de se dilater librement. Le gonflement des grains de poudre est alors compensé par la réduction de la taille des porosités. Le lit de matériau de stockage de l'hydrogène/d'hydrure se densifie ainsi progressivement au cours des cycles d'hydruration.

On appelle « cycle d'hydruration », une phase d'absorption suivi d'une phase de désorption d'hydrogène.

Il est donc important d'éviter une accumulation de matériau de stockage de l'hydrogène qui pourrait appliquer des contraintes pouvant détériorer la structure du réservoir.

Le document US 2004/0129048 décrit un réservoir d'hydrogène dans lequel l'hydrogène est stocké sous la forme d'hydrure métallique. Ce réservoir de forme cylindrique comporte des canaux longitudinaux remplis de poudre. Des tubes de circulation d'eau sont prévus dans certains canaux pour évacuer la chaleur.

D'une part ce dispositif n'assure pas une répartition homogène de la poudre dans tout le réservoir, ce qui peut provoquer l'application de contraintes dommageables à la structure. D'autre part, les échanges thermiques ne sont pas optimaux. De plus, la structure de canaux est complexe à réaliser, et le remplissage en poudre est fastidieux.

WO-A-2007/124825 divulgue un réservoir pour le stockage d'hydrogène comportant une enceinte extérieure et une structure interne comportant une pluralité d'étages. Chaque étage a plusieurs compartiments destinés à recevoir le matériau de stockage d'hydrogène. Les compartiments sont faits d'un matériau poreux. Le fond inférieur d'un compartiment touche le fond supérieur du compartiment suivant.

US4436537 décrit un réservoir d'hydrogène comprenant une pluralité de plateaux ouverts, les plateaux comprenant des zones en renfoncement raccordées par des parois, les zones en renfoncement étant d'un seul tenant. Ces zones sont destinées à contenir de l'hydrure. Le plateau est réalisé en un métal conducteur de la chaleur.

C'est par conséquent un but de la présente invention d'offrir un réservoir de stockage d'hydrogène apte à maintenir une répartition homogène de la poudre dans le réservoir. C'est également un but de la présente invention d'offrir un réservoir d'hydrogène de réalisation simple.

### EXPOSÉ DE L'INVENTION

Les buts précédemment énoncés sont atteints par un réservoir d'hydrogène d'axe longitudinal comportant une enceinte extérieure de confinement et une structure intérieure de répartition de l'hydrure métallique, ladite structure comportant une pluralité d'étages superposés, chaque étage comportant une pluralité de canaux s'étendant dans la direction de l'axe longitudinal, lesdits canaux étant divisés en compartiments par des parois transversales à l'axe longitudinal, chaque compartiment étant destiné à contenir un matériau apte à absorber de l'hydrogène. Le réservoir comporte également des échangeurs thermiques. Les canaux d'un étage, chaque canal étant formé par un fond et deux parois latérales longitudinales, sont formés d'un seul tenant.

Grâce à l'invention, on forme de manière simple des séparations horizontales étanches. Par ailleurs, la réalisation est simplifiée car on limite le nombre de pièces à assembler.

En d'autres termes, on confine la poudre de manière étanche par étage, celle-ci étant par ailleurs répartie dans des cellules limitant son déplacement et son accumulation, qui pourrait endommager le réservoir.

Le système d'échange thermique est par exemple sous forme de canaux dans lequel est destiné à circuler un caloporteur, les canaux étant interposés entre chaque étage, assurant une captation ou un apport homogène de chaleur au sein du réservoir. Ce qui permet notamment de réduire le temps de « chargement » en hydrogène.

La présente invention a alors pour objet un réservoir destiné au stockage de l'hydrogène par absorption dans un matériau, ledit réservoir ayant un axe longitudinal et comportant une enceinte extérieure et une structure interne d'axe longitudinal, la structure interne comportant une pluralité d'étages s'étendant suivant des plans parallèles à l'axe longitudinal et un système d'échange thermique au sein de la structure interne, chaque étage comportant un fond inférieur, un fond supérieur et des cloisons longitudinales et transversales, lesdites cloisons formant avec les fonds inférieur et supérieur des compartiments destinés à recevoir le matériau de stockage de l'hydrogène, dans lequel le fond supérieur et/ou le fond inférieur et les cloisons transversales ou longitudinales sont d'un seul tenant.

De manière particulièrement avantageuse, le fond supérieur et des cloisons longitudinales associées sont d'un seul tenant et le fond inférieur et des cloisons longitudinales associées sont d'un seul tenant.

Le fond supérieur et des cloisons longitudinales associées et le fond inférieur et des cloisons longitudinales associées sont réalisés respectivement préférentiellement par pliage d'un feuillard métallique.

Par exemple, les cloisons transversales sont solidarisées sur les cloisons longitudinales par coopération de fentes réalisées dans les cloisons longitudinales et dans les cloisons transversales.

Le réservoir selon la présente invention peut comporter des sous-ensembles formés d'un fond supérieur muni de cloisons transversales et longitudinales sur une face et d'un fond inférieur muni de cloisons transversales et longitudinales sur une face, les deux fonds étant solidaires par leurs faces opposées à celle portant lesdites cloisons.

La structure interne peut alors comporter un empilement desdits sous-ensembles, chaque compartiment comprenant une cloison longitudinale d'un sous-ensemble et une cloison longitudinale d'un autre sous-ensemble.

Le réservoir selon la présente invention comporte des canaux définis entre les fonds supérieur et inférieur solidarisés, lesdits canaux définissant le système d'échange thermique.

Les sous-ensembles sont par exemple tels qu'une cloison longitudinale portée par le fond supérieur est contenu dans le même plan qu'une cloison longitudinale portée par le fond inférieur, et dans lequel les canaux sont définis à l'aplomb des parois longitudinales. Lors du pliage pour former les cloisons longitudinales, la base des cloisons peut alors avantageusement être conformée pour ménager une rainure à section semi-circulaire. Des tuyaux peuvent être logés dans les canaux formés par deux desdites rainures en regard.

Avantageusement, les tuyaux sont brasés sur les parois des canaux.

Le réservoir peut comporter des moyens d'amener de l'hydrogène au sein des compartiments, par exemple formés par des tuyaux poreux.

Des encoches sont par exemple réalisées dans les cloisons transversales.

Par exemple, la hauteur d'un compartiment représente de 50 à 110 % de la longueur et 50 à 110 % de sa largeur.

La présente invention a également pour objet un réservoir de stockage d'hydrogène comportant un réservoir selon la présente invention et du matériau de stockage d'hydrogène disposé dans les compartiments.

Le matériau est avantageusement mis dans les compartiments sous forme de lingot.

Un volume libre représentant 12 % à 60 % du volume du compartiment est avantageusement prévu dans chaque compartiment.

Le matériau de stockage d'hydrogène peut être constitué d'au moins un matériau du type AₘBₙ constitué d'un élément A formant un hydrure stable tel que les métaux alcalins ou alcalino-terreux comme le lithium, le calcium ou le magnésium, les métaux de transition de quatrième ou cinquième colonne comme le zirconium, le titane, ou les terres rares métalliques comme le lanthane, le cérium et d'un élément B formant un hydrure instable dans les conditions standards, tel que la plupart des métaux de transition comme le chrome, le cobalt, le nickel ou le fer.

La présente invention a également pour objet un procédé de réalisation d'un réservoir de stockage d'hydrogène selon la présente invention, comportant les étapes de :
a) de découpe de tôle de feuillard aux dimensions souhaitées,
b) de pliage desdites tôles de sorte à former des canaux longitudinaux délimités par des cloisons longitudinales,
c) de montage de cloisons transversales pour délimiter des compartiments avec les cloisons longitudinales,
d) d'empilement des éléments ainsi formés et de remplissage ave le matériau de stockage d'hydrogène,
e) de mise en place dans une enceinte,
f) d'introduction de l'hydrogène dans l'enceinte moyennant quoi on transforme le ou les matériaux dans chacun des compartiments en hydrure métallique.

Le procédé de réalisation peut comporter préalablement à l'étape d), une étape c') lors de laquelle on effectue une solidarisation de deux éléments par leur face opposée à celle portant les cloisons, réalisant ainsi des sous-ensembles, et lors de l'étape d) on empile lesdits sous-ensembles.

Lors de l'étape c'), on dispose entre les deux éléments des tuyaux du système d'échange thermique, lesdits tuyaux pouvant être brasés sur chacun des éléments.

Le matériau de stockage d'hydrogène est avantageusement sous forme de lingot lors de sa mise en place dans les compartiments.

### BRÈVE DESCRIPTION DES DESSINS

La présente invention sera mieux comprise à l'aide de la description qui va suivre et des dessins en annexes sur lesquels :
- la figure 1 est une vue en perspective partiellement arrachée d'un exemple de réalisation d'un réservoir selon la présente invention et sur laquelle la structure interne d'un réservoir selon la présente invention est visible,
- la figure 2 est une vue en perspective d'un élément isolé de la structure de la figure 1,
- les figures 3A et 3B sont des vues en perspective d'une partie isolée de la structure interne selon la présente invention en cours de réalisation,
- la figure 4 est une vue en perspective de deux étages de la structure interne selon la présente invention,
- la figure 5 est une vue de face d'un détail de la structure interne du réservoir avec le matériau métallique sous forme d'un lingot,
- la figure 6 est une représentation schématique d'un compartiment rempli de poudre après décrépitation du lingot qu'il contenait initialement.

### EXPOSÉ DÉTAILLÉ DE MODES DE RÉALISATION PARTICULIERS

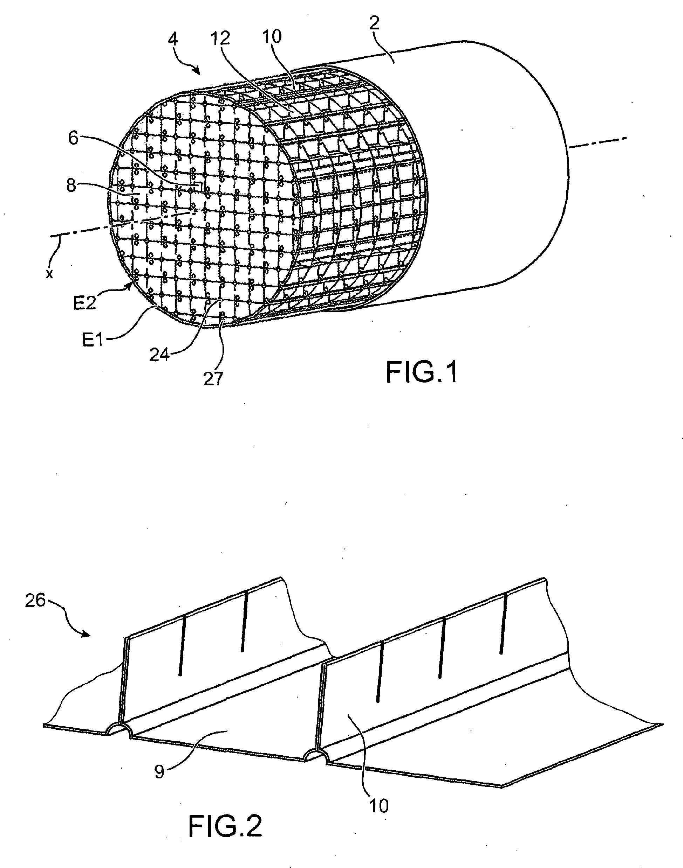

Sur la figure 1, on peut voir un exemple de réalisation d'un réservoir d'hydrogène selon la présente invention.

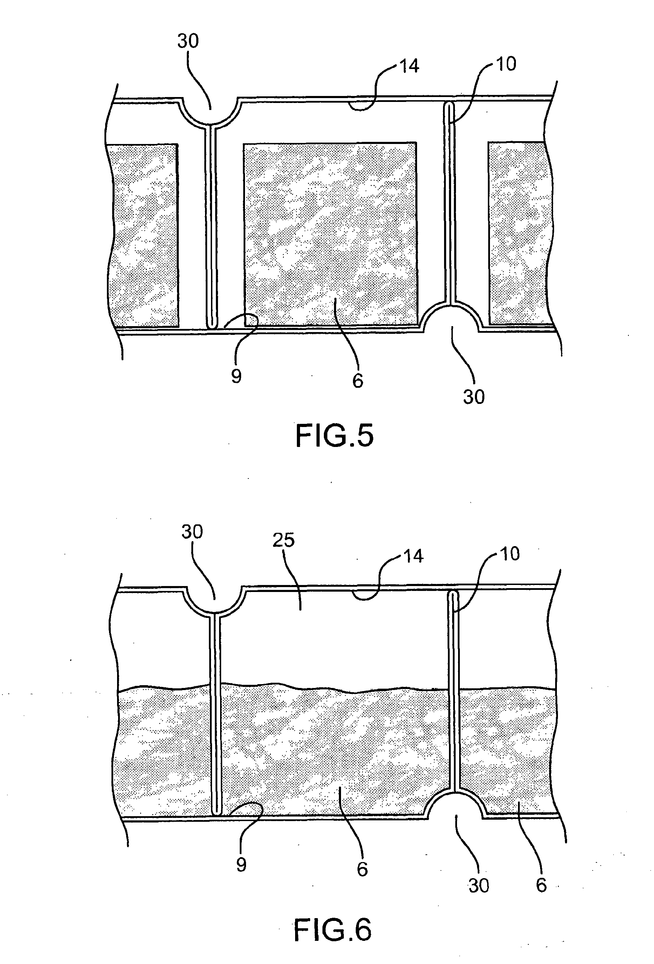

Le réservoir comporte une enceinte extérieure 2 apte à tenir la pression d'hydrogène, et une structure interne 4 de réception d'un matériau de stockage d'hydrogène 6 représenté sur la figure 5.

L'enceinte extérieure a, dans l'exemple représenté, la forme d'un cylindre à section circulaire d'axe longitudinal X. Cette forme est avantageuse pour la tenue à la pression, à l'instar d'une forme torique, mais n'est en aucun cas limitative, l'enceinte pourrait par exemple avoir une section carrée ou rectangulaire.

Le réservoir est destiné à être disposé sensiblement horizontalement en fonctionnement. Par conséquent, l'axe X est destiné à être à l'horizontal ou sensiblement à l'horizontal.

En général, le réservoir est raccordé à un circuit de circulation d'hydrogène connecté à une ou aux deux extrémités longitudinales de l'enceinte pour charger le réservoir en hydrogène et décharger le réservoir de l'hydrogène. En outre, un système d'échange thermique qui sera décrit par la suite assure la circulation d'une extrémité longitudinale à l'autre d'un caloporteur. Le réservoir est donc soumis généralement à des flux d'hydrogène et de caloporteur orientés longitudinalement.

Le réservoir, et plus particulièrement la structure interne présente alors avantageusement une architecture adaptée aux flux longitudinaux. Mais la présente invention peut être adaptée à des flux ayant une autre orientation.

Dans la présente demande, on qualifie de « supérieur » et « inférieur » un élément ou une partie d'élément destiné à avoir une position haute ou basse dans la représentation du réservoir de la figure 1, mais ceci n'est en aucun cas limitatif.

L'enceinte extérieure 2 est par exemple en acier inox, en aluminium ou en matériau composite tissée. Dans le cas de réservoirs hydrures dits basse pression, les pressions auxquelles l'enceinte résiste sont de l'ordre de 1 à 50 bars d'hydrogène. Dans les applications à des pressions plus hautes, les pressions auxquelles résiste l'enceinte sont comprises entre 50 bars et 350 bars, voire 700 bars.

La structure interne 4 comporte une pluralité d'étages E1, E2,... En, n étant un entier naturel, superposés. Les étages s'étendent dans des plans parallèles à l'axe longitudinal. Dans les exemples représentés, ils sont horizontaux.

Chaque étage E1, E2,... En est divisé en compartiments 8. Plus particulièrement, chaque étage comporte un fond inférieur 9, des cloisons longitudinales 10, des cloisons transversales 12 et un fond supérieur 14 délimitant les compartiments 8.

Avantageusement, les compartiments présentent un faible élancement, i.e. une hauteur réduite par rapport à sa surface pour éviter une concentration de contraintes dans la partie inférieure des cloisons lors du gonflement du matériau de stockage d'hydrogène.

Par exemple, afin d'obtenir des caractéristiques d'absorption de l'hydrogène dans le réservoir de l'ordre de quelques dizaines de minutes, les dimensions des cellules se situent aux alentours de 25mm à 50mm pour la largeur, la profondeur et la hauteur des compartiments. L'espace libre au dessus de la poudre présente une hauteur comprise entre 5 mm et 10 mm de hauteur, suivant le gonflement de l'hydrure utilisé.

La structure interne 4 comporte également un système d'échange thermique 16 apte à assurer un retrait de chaleur des compartiments et un apport de chaleur dans les compartiments de manière homogène, c'est-à-dire situé au plus proche du matériau hydrure. Le système d'échange thermique 16 est disposé entre chaque étage et utilise entre autres les cloisons longitudinales comme surfaces d'échange thermique.

Pour cela, le système d'échange thermique 16 comporte des canaux 18 s'étendant longitudinalement à travers la structure et courant le long des fonds inférieurs et des fonds supérieurs 14.

De manière particulièrement avantageuse, on réalise des éléments 26 comportant le fond inférieur 9 ou le fond supérieur 14 et les cloisons longitudinales 10 d'un seul tenant, par exemple par pliage d'un feuillard métallique comme cela est visible sur la figure 2. La réalisation de cet élément 26 d'un seul tenant, outre le fait que la fabrication est simplifiée puisque le nombre de pièces est réduit et que l'on évite le recours à un assemblage par soudure, permet d'assurer simplement à la fois une étanchéité entre chaque étage empêchant le matériau de stockage d'hydrogène de passer d'un étage à l'autre, notamment de tomber dans les étages inférieurs, et une étanchéité transversale au moyen des cloisons longitudinales.

Les cloisons longitudinales 10 sont par exemple réalisés par pliage de deux portion de tôles l'une contre l'autre, sans laisser subsister d'espace entre les deux portions de tôles sur un grande partie de leur surface.

De manière également très avantageuse, on prévoit de réaliser des éléments 26 sensiblement similaires pour définir le fond inférieur et des cloisons longitudinales et pour définir le fond supérieur et des cloisons longitudinales. L'assemblage de ces deux sous-structures délimite les compartiments.

Pour le montage des cloisons transversales 12, on réalise des découpes verticales 20 dans les cloisons longitudinales 12 au niveau de leur extrémité libre le long de l'axe X, leur espacement définissant la longueur des compartiments. Des découpes similaires dans les cloisons transversales 12 sont également réalisées. Lors du montage des cloisons transversales 12, les découpes sont mises en correspondance et les cloisons 10, 12 se pénètrent l'une l'autre, de sorte à former des « casiers ». Les découpes dans les cloisons longitudinales et transversales ont une longueur inférieure à la hauteur des cloisons.

Les cloisons longitudinales 10 et transversales 12 limitent le déplacement transversal et longitudinal, respectivement, du matériau de stockage d'hydrogène.

Par exemple, si le réservoir est embarqué dans un véhicule automobile, celui-ci n'a pas nécessairement toujours une position sensiblement horizontale et peut subir des vibrations, tendant à déplacer la poudre. En outre, ces cloisons assurent une rigidification des étages.

De manière également particulièrement avantageuse, on intègre le système d'échange thermique dans la structure interne 4 lors de la réalisation des cloisons longitudinales 10. Pour cela, la base des cloisons longitudinales 10 est formée par une rainure 30 d'axe longitudinal de section semi-circulaire. En assemblant un fond supérieur et un fond inférieur, les deux rainures sont face à face et délimitent un cylindre formant un canal 18.

Le canal 18 peut former directement un canal d'écoulement d'un caloporteur ou alors on peut prévoir, comme cela est représenté sur les figures 1, 3 et 4, d'introduire un tuyau 24 dans le canal 18. De manière avantageuse, le tuyau 24 est brasé sur le feuillard pour améliorer les échanges thermiques.

Le canal 18 ou le tuyau 24 est raccordé par une extrémité (non représentée) à une alimentation en caloporteur et l'autre extrémité (non représentée) est raccordée à une évacuation de caloporteur. Le tuyau 24 est par exemple en aluminium ou en acier inox.

Du matériau de stockage d'hydrogène est disposé dans chaque compartiment.

Un volume libre 25 est prévu au dessus de la poudre pour éviter les interactions mécaniques entre le matériau et le fond supérieur lorsque le matériau gonfle du fait du chargement en hydrogène.

Ce volume libre 25 est réalisé en prévoyant lors de l'assemblage un jeu entre le matériau et la structure. Lorsque le matériau mis en place est sous forme de lingot, un jeu latéral et un jeu avec le fond supérieur sont prévus. Après les différentes décrépitations, le matériau forme un lit de poudre en contact avec les parois latérales et séparé du fond supérieur par le volume libre 25.

Pour effectuer le chargement du matériau avec l'hydrogène, on peut faire simplement circuler de l'hydrogène dans les compartiments au niveau des parties supérieures des compartiments, l'hydrogène circulant dans les volumes libres 25. A cet effet, on peut prévoir que les parois transversales 12 soient ajourées, de préférence dans leur partie supérieure en correspondance avec le volume libre 25.

On peut également ajouter des tubes poreux 27 d'alimentation en hydrogène traversant le matériau de stockage d'hydrogène dans le cas où la perméation entre le matériau de stockage d'hydrogène et l'hydrogène situé dans le volume libre 25 n'est pas suffisante, du fait de la densification du matériau lors des décrépitations successives. Dans le cas où l'on prévoit des tuyaux poreux, les cloisons transversales 12 sont découpées pour permettre le passage des tuyaux 27. Par exemple, on prévoit un tuyau par rangée de compartiments s'étendant le long de la direction longitudinale. Ces tubes permettent également de récolter l'hydrogène désorbé.

Avantageusement, les tubes 27 se situent au fond des compartiments et sensiblement le long de leur axe longitudinal. Alternativement, ils peuvent passer dans le volume libre 25.

Les cloisons transversales 12 comportent avantageusement des échancrures ou des encoches (non représentées) ou niveau de leur extrémité supérieure pour permettre la circulation d'hydrogène d'un compartiment à un autre se suivant le long de l'axe X.

On peut prévoir de telles échancrures dans les cloisons longitudinales.

La collecte de l'hydrogène, lors d'une désorption, s'effectue également par les volumes libres 25 des compartiments.

Le matériau formant la structure 4 est préférentiellement un très bon conducteur thermique pour assurer un retrait ou un apport efficace de la chaleur. Avantageusement, la structure est réalisée en aluminium. On peut également prévoir d'utiliser du cuivre. Ces matériaux présentent en outre l'avantage de permettre une mise en forme aisée, notamment par pliage et découpe. On peut également utiliser de l'acier inox.

Nous allons maintenant décrire un exemple d'un procédé de réalisation d'un réservoir de la figure 1.

Lors d'une première étape, on réalise des plaques de tôle ou un feuillard aux dimensions souhaitées. Typiquement le feuillard est épais de quelques centaines de microns.

Lors d'une étape suivante, le feuillard est plié pour obtenir de grandes longueurs pliées suivant le motif de pliage pour obtenir l'élément 26 de la figure 2. Le réservoir de la figure 1 ayant une section circulaire, les différents étages n'ont pas la même surface. On utilise alors avantageusement un feuillard plié de grande dimension, dans lequel chaque structure pliée 26 est débitée en tenant compte de l'étage où elle se trouve.

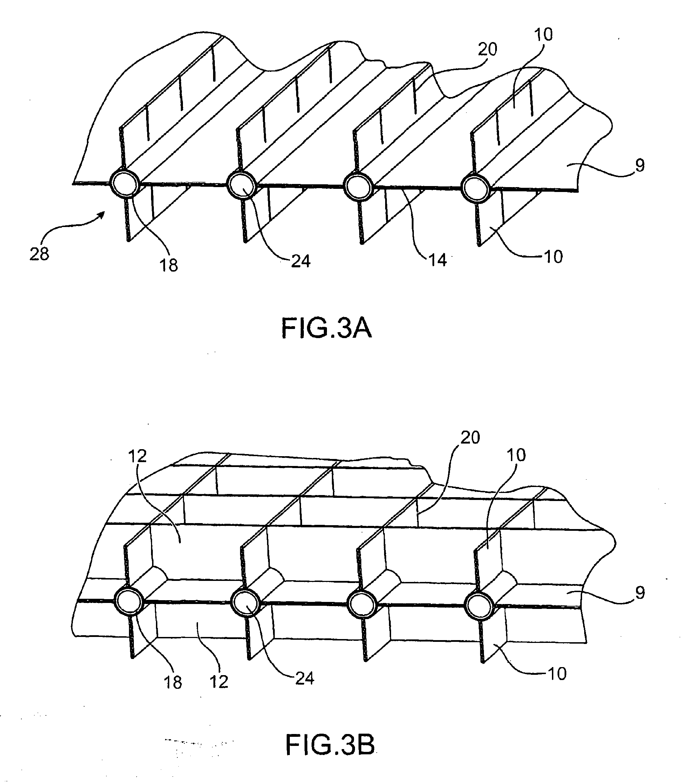

On assemble ensuite deux éléments 26 dos à dos, de sorte que le fond inférieur d'un élément et le fond supérieur d'un autre élément soient en contact l'un avec l'autre et que les cloisons longitudinales en saillie du fond inférieur et en saillie du fond supérieur soient sensiblement coplanaires deux à deux. Cet assemblage, représenté sur la figure 3A, délimite également les canaux 18 entre le fond inférieur et le fond supérieur. Cet assemblage est désigné sous-ensemble 28. L'assemblage des deux éléments 26 dos à dos peut être effectué par brasage en four, ce qui améliore les propriétés de conduction thermique de l'ensemble, dans ce cas, des rouleaux de feuillard déjà enduits de brasure peuvent être avantageusement utilisés. L'assemblage peut aussi s'effectuer par la simple réalisation de quelques points de soudure par soudage résistif. Si des tuyaux 24 sont prévus pour la circulation du caloporteur, ceux-ci peuvent être mis en place avant l'assemblage des deux éléments 26. Avantageusement, les tuyaux sont brasés sur les éléments dans les rainures, ce qui a pour effet d'améliorer les échanges thermiques entre les tuyaux et les éléments.

Lors d'une étape suivante, on met en place les cloisons transversales 12 dans les découpes verticales 20, comme cela est représenté sur la figure 3B. Des espaces sont alors délimités sur le fond inférieur et le fond supérieur, les espaces ainsi délimités correspondent à la surface de deux compartiments.

Lors d'une étape suivante, on dispose le matériau de stockage d'hydrogène sur le fond inférieur des compartiments. Ce matériau peut être sous la forme de poudre.

De manière particulièrement avantageuse, le matériau de stockage d'hydrogène est sous forme d'un lingot solide. Deux lingots sont disposés dans chaque espace à distance l'une de l'autre. La mise en oeuvre de lingots permet de faciliter la mise en place du sous ensemble suivant.

La forme des lingots est sensiblement analogue à celle des compartiments.

Les tubes poreux d'amenée de l'hydrogène sont mis en place également lors de cette étape.

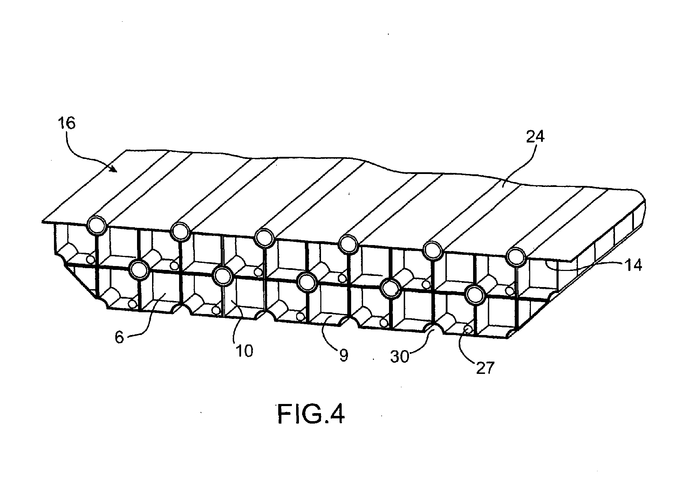

Lors d'une étape suivante, on dispose un sous-ensemble supérieur sur le sous-ensemble inférieur comportant le matériau de stockage d'hydrogène, en disposant les cloisons longitudinales entre deux cloisons longitudinales du sous-ensemble inférieur entre deux lingots, comme cela est représenté sur la figure 4. Un étage est ainsi formé. L'extrémité libre des cloisons longitudinales du sous-ensemble supérieur est en contact avec le fond inférieur du premier sous-ensemble et l'extrémité libre des cloisons longitudinales du sous-ensemble inférieur est en contact avec le fond du deuxième sous-ensemble supérieur. Ces contacts ne sont pas étanches, mais sont suffisamment étroits pour limiter le passage de grosses quantités de matériau d'un compartiment à l'autre. De même pour les cloisons transversales, celles-ci ne sont pas étanches, cependant elles forment une barrière suffisante. Par ailleurs, il est rappelé que l'axe du réservoir est destiné à rester sensiblement horizontal. Par conséquent les mouvements latéraux du matériau sont faibles. Par contre, grâce à l'invention la séparation entre étages étant d'un seul tenant le passage de matériau vers un étage inférieur est empêché.

On répète les étapes précédentes jusqu'à obtenir la structure interne de la taille souhaitée.

Les sous éléments sont immobilisés les uns par rapport aux autres suivant les directions longitudinale et transversale du fait de leur imbrication par l'intermédiaire des cloisons transversales 12 et des découpes verticales 20 dans lesquelles s'insèrent les cloisons transversales 12.

Il est bien entendu que le premier et le dernier étage ne sont pas réalisés exactement comme les étages intermédiaires. En effet, dans l'exemple représenté, le premier étage ne comporte qu'un fond supérieur et des cloisons longitudinales et transversales et le dernier sous-ensemble ne comporte qu'un fond inférieur, des cloisons longitudinales et transversales.

La structure définitive est ensuite introduite dans l'enceinte extérieure 2. Les connexions des tuyaux poreux et des tuyaux du système d'échange thermiques sont effectuées et l'enceinte est fermée de manière étanche.

Lors des premiers chargements en hydrogène, un phénomène de décrépitation apparaît, i.e. l'hydrogène est absorbé par les lingots métalliques, qui gonflent et éclatent en fines particules formant une poudre

Après plusieurs étapes de chargement, le compartiment contient de la poudre en contact avec le fond inférieur et les parois latérales et transversales comme cela est schématisé sur la figure 6.

Il est bien entendu que l'on peut prévoir de construire la structure interne du réservoir en superposant des éléments 26, ceux-ci comportant les cloisons longitudinales requises et délimitant le fond et les parois latérales des compartiments.

On pourrait envisager de réaliser par pliage les cloisons transversales 12, les cloisons longitudinales 10 pouvant alors être montées par emboîtement comme cela été décrit pour les cloisons transversales 12.

A titre d'exemple, le matériau disposé dans les compartiments peut être composé de un ou plusieurs matériaux utilisés pour le stockage de l'hydrogène. Ces matériaux de stockage d'hydrogène peuvent être choisis à partir des différentes familles telles que AB, A₂B, A₂B₇, AB₂ ou AB₅ ou être un mélange de ces familles de matériaux.

Les hydrures métalliques réversibles de formule AₘBₙ sont constitués d'un élément A formant un hydrure stable tel que les métaux alcalins ou alcalino-terreux comme le lithium, le calcium ou le magnésium, les métaux de transition de quatrième ou cinquième colonne comme le zirconium, le titane, ou enfin les terres rares métalliques comme le lanthane, le cérium et d'un élément B formant un hydrure instable dans les conditions standards, tel que la plupart des métaux de transition comme le chrome, le cobalt, le nickel ou le fer.

Ces matériaux peuvent avoir une structure cubique centrée (cc), une structure cubique à faces centrées (cfc) ou une structure cristallographique de type C-14 ou C-15.

Par exemple, ces matériaux peuvent être Mg, Mg-Ni, Mg-Cu, Ti-Fe, Ti-Mn, Ti-Ni, Ti-V, Mn-Ni, Ti-V-Cr, Ti-V-Fe. Les capacités d'absorption de l'hydrogène en fonction des pressions et des températures utilisées varient suivant les matériaux de stockage d'hydrogène

D'autres matériaux absorbant l'hydrogène comme les hydrures chimiques complexes avec des éléments légers tels que les alanates (NaAlH4), les hydrures à base de Li et de B tels que LiBH4, NaBH4, ou alors des imides ou des amides, peuvent aussi être utilisés dans la géométrie décrite dans la présente invention.

Nous allons maintenant expliquer le fonctionnement de ce réservoir.

Lorsque l'on veut charger le réservoir en hydrogène, on fait circuler de l'hydrogène dans le réservoir, par exemple dans les tuyaux poreux. La réaction d'absorption étant exothermique, de la chaleur est dégagée. On évacue la chaleur simultanément en faisant circuler un caloporteur froid dans les tuyaux 24 qui se trouve à la croisée de deux cloisons longitudinales et entre les paires de fond inférieur et de fond supérieur. Les cloisons, particulièrement les cloisons longitudinales 10, le fond inférieur et le fond supérieur fonctionnent comme des ailettes de refroidissement, captant la chaleur et le conduisant au caloporteur circulant dans les tuyaux 24. Plus la chaleur est évacuée rapidement et efficacement, plus le chargement du réservoir est rapide. Le matériau chargé en hydrogène forme alors un hydrure métallique. Comme déjà expliqué le matériau gonfle du fait de l'absorption et se décrépite, pour former de la poudre.

Lorsque l'on souhaite disposer de l'hydrogène contenu dans le réservoir, on abaisse la pression d'hydrogène dans le réservoir et/ou on chauffe l'hydrure via les tuyaux de l'échangeur thermique et les ailettes formées par la structure interne. L'hydrogène est désorbé. L'hydrogène ainsi libéré circule d'un volume libre 25 à l'autre via les encoches faites dans la partie supérieure des cloisons 10, 12 et est collectée à une extrémité longitudinale du réservoir.

La température de chargement et de déchargement du réservoir varie par exemple de -20°C à 400 °C. La pression de chargement varie par exemple de 0,1 bar à 200 bars H₂, et la pression de déchargement varie par exemple de 100 bars à 0 bar (absolus).

Le réservoir selon la présente invention offre un très bon compromis entre la masse ajoutée du fait de la structure interne 4 séparant le matériau de stockage d'hydrogène et l'efficacité d'échange thermique qui en résulte.

De plus, il offre des cellules dont la dimension suivant la verticale peut être aisément inférieure ou au plus du même ordre de grandeur que les dimensions de la cellule dans les directions horizontales en considérant la représentation de la figure 4, ce qui permet de limiter les contraintes mécaniques sur les parties inférieures des compartiments. Un espace suffisant peut être ménagé dans chacune des cellules afin que le matériau puisse se dilater sans entrave. Cet espace se trouve autour et au dessus des lingots lors de l'assemblage et se trouve au dessus du lit de poudre d'hydrure formé après décrépitation.

En outre, il évite que la poudre ne puisse migrer entre les différentes cellules suivant la direction verticale

Par ailleurs, le système d'échange thermique est distribué en couches dans la structure interne assurant un échange thermique efficace entre la structure et le matériau de stockage.

Le réservoir selon la présentation invention peut être appliqué dans l'ensemble des applications mettant en oeuvre un stockage de l'hydrogène, à la fois, dans les domaines mettant en oeuvre un stockage de grandes quantités et ceux nécessitant des stockages de petites quantités.

Par exemple, il peut être utilisé comme réservoir pour les moyens -de locomotion, comme les bateaux, les sous-marins tels que les voitures particulière, les autobus, les camions, engins de chantier et agricoles, les véhicules à deux roues.

Il peut également être utilisé dans les alimentations pour les dispositifs portables tels que les appareils électronique portables (téléphone portable, ordinateur portables,...).

Il peut aussi être appliqué aux systèmes de stockage en plus grosse quantité, telle que pour des groupes électrogènes, pour le stockage de l'hydrogène produit en grande quantité grâce à l'énergie des éoliennes, des panneaux photovoltaïques, de la géothermie.

## Revendications

1. Réservoir destiné au stockage de l'hydrogène par absorption dans un matériau, ledit réservoir ayant un axe longitudinal (X) et comportant une enceinte extérieure (2) et une structure interne (4) d'axe longitudinal (X), la structure interne (4) comportant une pluralité d'étages (E1, E2, ...En) s'étendant suivant des plans parallèles à l'axe longitudinal et un système d'échange thermique au sein de la structure interne (4), chaque étage (E1, E2,... En) comportant un fond inférieur (9), un fond supérieur (14) et des cloisons longitudinales (10) et transversales (12), lesdites cloisons (10, 12) formant avec les fonds inférieur (9) et supérieur (14) des compartiments (8) destinés à recevoir le matériau de stockage de l'hydrogène (6), dans lequel le fond supérieur (14) et/ou le fond inférieur (9) et les cloisons transversales (12) ou longitudinales (10) sont d'un seul tenant.

2. Réservoir selon la revendication 1, dans lequel le fond supérieur (14) et des cloisons longitudinales (10) associées sont d'un seul tenant et le fond inférieur (9) et des cloisons longitudinales (10) associées sont d'un seul tenant.

3. Réservoir selon la revendication 2, dans lequel le fond supérieur (14) et des cloisons longitudinales (10) associées et le fond inférieur (9) et des cloisons longitudinales (10) associées sont réalisés respectivement par pliage d'un feuillard métallique.

4. Réservoir selon l'une des revendications 1 à 3, dans lequel les cloisons transversales (12) sont solidarisées sur les cloisons longitudinales (10) par coopération de fentes réalisées dans les cloisons longitudinales (10) et dans les cloisons transversales (12).

5. Réservoir selon l'une des revendications 1 à 4, comportant des sous-ensembles formés d'un fond supérieur (14) muni de cloisons transversales (12) et longitudinales (10) sur une face et d'un fond inférieur (9) muni de cloisons transversales (12) et longitudinales (14) sur une face, les deux fonds (9, 14) étant solidaires par leurs faces opposées à celle portant lesdites cloisons (10, 12).

6. Réservoir selon la revendication précédente, dans lequel la structure interne (4) comporte un empilement desdits sous-ensembles, chaque compartiment (8) comprenant une cloison longitudinale (10) d'un sous-ensemble et une cloison longitudinale (10) d'un autre sous-ensemble.

7. Réservoir selon la revendication 5 ou 6, comportant des canaux (18) définis entre les fonds supérieur (14) et inférieur (9) solidarisés, lesdits canaux (18) définissant le système d'échange thermique.

8. Réservoir selon la revendication précédente, dans lequel les sous-ensembles sont tels qu'une cloison longitudinale (10) portée par le fond supérieur (14) est contenu dans le même plan qu'une cloison longitudinale (10) portée par le fond inférieur (9), et dans lequel les canaux sont définis à l'aplomb des parois longitudinales (10).

9. Réservoir selon la revendication 7 ou 8, dans lequel lors du pliage pour former les cloisons longitudinales(10), la base des cloisons (10) est conformée pour ménager une rainure à section semi-circulaire.

10. Réservoir selon la revendication précédente, comportant des tuyaux (24) logés dans les canaux (18) formés par deux desdites rainures en regard, lesdits tuyaux (24) étant avantageusement brasés sur les parois des canaux.

11. Réservoir selon l'une des revendications précédentes, comportant des moyens (27) d'amener de l'hydrogène au sein des compartiments, par exemple formés par des tuyaux poreux.

12. Réservoir selon l'une des revendications 1 à 11, dans lequel des encoches sont réalisées dans les cloisons transversales (12)'.

13. Réservoir selon l'une des revendications 1 à 12, dans lequel la hauteur représente de 50 à 110 % de la longueur et 50 à 110 % de la largeur.

14. Réservoir de stockage d'hydrogène comportant un réservoir selon l'une des revendications précédentes et du matériau de stockage d'hydrogène (6) disposé dans les compartiments (8), ledit matériau étant avantageusement mis dans les compartiments sous forme de lingot.

15. Réservoir de stockage d'hydrogène selon la revendication 14, dans lequel un volume libre (25) représentant 12 % à 60 % du volume du compartiment (8) est prévu dans chaque compartiment (8).

16. Réservoir de stockage d'hydrogène selon la revendication 14 ou 15, dans lequel le matériau de stockage d'hydrogène (6) est constitué d'au moins un matériau du type AₘBₙ constitué d'un élément A formant un hydrure stable tel que les métaux alcalins ou alcalino-terreux comme le lithium, le calcium ou le magnésium, les métaux de transition de quatrième ou cinquième colonne comme le zirconium, le titane, ou les terres rares métalliques comme le lanthane, le cérium et d'un élément B formant un hydrure instable dans les conditions standards, tel que la plupart des métaux de transition comme le chrome, le cobalt, le nickel ou le fer.

17. Procédé de réalisation d'un réservoir de stockage d'hydrogène selon l'une des revendications 14 à 16, comportant les étapes de :
a) de découpe de tôle de feuillard aux dimensions souhaitées,
b) de pliage desdites tôles de sorte à former des canaux longitudinaux délimités par des cloisons longitudinales,
c) de montage de cloisons transversales pour délimiter des compartiments avec les cloisons longitudinales,
d) d'empilement des éléments ainsi formés et de remplissage ave le matériau de stockage d'hydrogène,
e) de mise en place dans une enceinte,
f) d'introduction de l'hydrogène dans l'enceinte moyennant quoi on transforme le ou les matériaux dans chacun des compartiments en hydrure métallique.

18. Procédé de réalisation selon la revendication précédente, comportant préalablement à l'étape d), une étape c') lors de laquelle on effectue une solidarisation de deux éléments par leur face opposée à celle portant les cloisons, réalisant ainsi des sous-ensembles, et lors de l'étape d) on empile lesdits sous-ensembles.

19. Procédé de réalisation selon la revendication précédente, dans lequel, lors de l'étape c'), on dispose entre les deux éléments des tuyaux du système d'échange thermique, lesdits tuyaux pouvant être brasés sur chacun des éléments.

## Patentansprüche

1. Tank, der vorgesehen ist zur Speicherung von Wasserstoff durch Absorption in eimem Material, wobei der Tank eine Längsachse (X) aufweist und ein äußeres Gehäuse (2) und eine innere Struktur (4) der Längsachse (X) aufweist, wobei die innere Struktur (4) mehrere Stufen (E₁ E₂, ...Eₙ), die aufeinander folgen in parallelen Ebenen zur Längsachse und ein thermisches Austauschsystem in der inneren Struktur (4), worin jede Stufe (E₁, E₂, ...Eₙ) einen unteren Boden (9), einen oberen Boden (14) und longitudinale Trennwände (10) und transversale Trennwände (12) aufweist, wobei die Trennwände (10, 12) mit den unteren Böden (9) und oberen Böden (14) Kompartimente (8) bilden, die vorgesehen sind zur Aufnahme von Speichermaterial für Wasserstoff (6), worin der obere Boden (14) und/oder der untere Boden (9) und die transversalen Trennwände (12) oder longitudinalen Trennwände (10) in einem Stück sind.

2. Tank nach Anspruch 1, worin der obere Boden (14) und die longitudinalen in Verbindung stehenden Trennwände(1 0) in einem Stück sind und der untere Boden (9) und die in Verbindung stehenden longitudinalen Trennwände (10) in einem Stück sind.

3. Tank nach Anspruch 2, worin der obere Boden (14) und die in Verbindung stehenden longitudinalen Trennwände (10) und der untere Boden (9) und die in Verbindung stehenden longitudinalen Trennwände (10), jeweils hergestellt sind durch Biegen eines Metallbands.

4. Tank nach einem der Ansprüche 1 bis 3, worin die transversalen Trennwände (12) verbunden sind über die longitudinalen Trennwände (10) durch Zusammenwirken von Schlitzen, die in den longitudinalen Trennwänden (10) und den transversalen Trennwänden (12) hergestellt sind.

5. Tank nach einem der Ansprüche 1 bis 4, enthaltend Untereinheiten, gebildet aus einem oberen Boden (14), ausgestattet mit transversalen Trennwänden (12) und longitudinalen Trennwänden (10) auf einer Seite und einem unteren Boden (9), ausgestattet mit transversalen Trennwänden (12) und longitudinalen Trennwänden (14) auf einer Seite, worin die beiden Böden (9, 14) verbunden sind über ihre Seiten, die gegenüberliegend zu denjenigen sind, die die Trennwände (10, 12) aufweisen.

6. Tank nach dem vorhergehenden Anspruch, worin die innere Struktur 4 einen Stapel aus den Untereinheiten (8) aufweist, wobei jedes Kompartiment (8) eine longitudinale Trennwand (10) aus einer Untereinheit und eine longitudinale Trennwand (10) aus einer anderen Untereinheit umfasst.

7. Tank nach Anspruch 5 oder 6, umfassend Kanäle (18), die definiert sind zwischen den verbundenen oberen Böden (14) und unteren Böden (9), worin die Kanäle (18) das thermische Austauschsystem definieren.

8. Verfahren nach dem vorhergehenden Anspruch, worin die Untereinheiten so ausgestaltet sind, dass eine longitudinale Trennwand (10), die vom oberen Boden (14) getragen wird, in der gleichen Ebene enthalten ist wie eine longitudinale Trennwand (10), die vom unteren Boden (9) getragen wird, und in welcher die Kanäle lotrecht definiert sind zu den longitudinalen Trennwänden (10).

9. Tank nach Anspruch 7 oder 8, worin auf Grund der Biegung zur Bildung der longitudinalen Trennwände (10) die Basis der Trennwände (10) entsprechend ist, um eine Nut mit einem halbrunden Querschnitt zu ergeben.

10. Tank nach dem vorhergehenden Anspruch, umfassend Leitungen (24), angeordnet in den Kanälen (18), die gebildet sind aus zwei der betreffenden Nuten , worin die Leitungen (24) vorteilhafterweise auf die Wände der Kanäle gelötet sind.

11. Tank nach einem der vorhergehenden Ansprüche, umfassend Mittel (27) zum Leiten von Wasserstoff in die Kompartimente, zum Beispiel gebildet aus porösen Leitungen.

12. Tank nach einem der Ansprüche 1 bis 11, in welchem Schlitze in den transversalen Trennwänden (12) gebildet sind.

13. Tank nach einem der Ansprüche 1 bis 12, in welchem die Höhe 50 bis 110 % der Länge und 50 bis 110 % der Breite darstellt.

14. Tank zur Speicherung von Wasserstoff, ausgestattet mit einem Tank nach einem der vorhergehenden Ansprüche und einem Speichermaterial (6) für Wasserstoff, angeordnet in den Kompartimenten (8), wobei das Material vorteilhafterweise in die Kompartimente in Blockform eingebracht ist.

15. Tank zum Speichern von Wasserstoff nach Anspruch 14, in welchem ein freies Volumen (25), das 12 % bis 60 % des Volumens des Kompartiments (8) darstellt, in jedem Kompartiment (8) vorgesehen ist.

16. Tank zum Speichern von Wasserstoff nach Anspruch 14 oder 15, in welchen das Speichermaterial (6) für Wasserstoff aus mindestens einem Material des AₘBₙ-Typs besteht, gebildet aus einem Element A, das ein stabiles Hydrid bildet, wie die Alkali- oder Erdalkalimetalle, wie Lithium, Calcium oder Magnesium, die Übergangsmetalle der vierten oder fünften Gruppe wie Zirkonium, Titan, oder die Seltenerdmetalle, wie Lanthan, Cer, und einem Element B, das ein instabiles Hydrid unter den Standardbedingungen bildet, wie die meisten Übergangsmetalle, wie Chrom, Kobalt, Nickel oder Eisen.

17. Verfahren zur Herstellung eines Tanks zur Speicherung von Wasserstoff nach einem der Ansprüche 14 bis 16, umfassend die Schritte:
a) Zuschneiden von Bandblech auf gewünschte Abmessungen,
b) Biegen der Bleche, um longitudinale Kanäle zu bilden, die begrenzt werden durch die longitudinalen Trennwände,
c) Zusammenbauen der transversalen Trennwände zum Begrenzen von Kompartimenten mit den longitudinalen Trennwänden,
d) Stapeln der so gebildeten Elemente und Auffüllen mit dem Speichermaterial für Wasserstoff,
e) Anordnen in einem Gehäuse,
f) Einleiten von Wasserstoff in das Gehäuse wodurch das oder die Materialien in jedem der Kompartimente in Metallhydrid übergeführt werden.

18. Herstellungsverfahren nach dem vorhergehenden Anspruch, umfassend vor Schritt d) einen Schritt c'), bei welchem man eine Verbindung von zwei Elementen über ihre Seite erreicht, die der, die die Trennwände aufweist gegenüberliegt, wobei so Untereinheiten hergestellt werden, und bei Schritt d) Stapeln der Untereinheiten.

19. Herstellungsverfahren nach dem vorhergehenden Anspruch, in welchem man bei Schritt c' zwischen den zwei Elementen Leitungen des thermischen Austauschsystems anordnet, wobei die Leitungen auf jedes der Elemente gelötet werden können.

## Claims

1. A tank for storing hydrogen through absorption into a material, said tank having a longitudinal axis (X) and comprising an outer enclosure (2) and an inner structure (4) having a longitudinal axis X, the inner structure (4) comprising a plurality of stages (E1, E2, ...En) extending along planes parallel to the longitudinal axis and a heat exchange system within the inner structure (4), each stage (E1, E2, ...En) comprising a lower bottom (9), an upper bottom (14) and longitudinal partition walls (10) and transverse partition walls (12), said walls (10, 12) forming with the lower bottoms (9) and upper (14) bottoms compartments (8) for receiving the hydrogen storage material (6), wherein the upper bottom (14) and/or the lower bottom (9) and the transverse partition walls (12) or longitudinal partition walls (10) are made as a single piece.

2. The tank according to claim 1, wherein the upper bottom (14) and associated longitudinal partition walls (10) are made as a single piece and the lower bottom (9) and associated longitudinal partition walls (10) are made as a single piece.

3. The tank according to claim 2, wherein the upper bottom (14) and associated longitudinal partition walls (10) and the lower bottom (9) and associated longitudinal partition walls (10) are respectively made by folding a metal strip.

4. The tank according to one of claims 1 to 3, wherein the transverse partition walls (12) are fixed on the longitudinal partition walls (10) by cooperation of slots made in the longitudinal partition walls (10) and the transverse partition walls (12).

5. The tank according to one of claims 1 to 4, comprising subassemblies formed by an upper bottom (14) provided with transverse partition walls (12) and longitudinal partition walls (10) on one face and a lower bottom (9) provided with transverse partition walls (12) and longitudinal partition walls (14) on one face, both bottoms (9, 14) being attached one to the other through their faces opposite to that carrying said partition walls (10, 12).

6. The tank according to the preceding claim, wherein the inner structure (4) comprises a stack of said subassemblies, each compartment (8) comprises a longitudinal partition wall (10) of a subassembly and a longitudinal partition wall (10) of another subassembly.

7. The tank according to claim 5 or 6, comprising channels (18) defined between the upper bottom (14) and lower (9) bottom attached one to the other, said channels (8) defining the heat exchange system.

8. The tank according to the preceding claim, wherein the subassemblies are such that a longitudinal partition wall (10) carried by the upper bottom (14) is contained in the same plane as a longitudinal partition wall (10) carried by the lower bottom (9), and wherein the channels are defined directly below the longitudinal walls (10).

9. The tank according to claim 7 or 8, wherein upon folding to form the longitudinal partition walls (10), the base of the partition walls (10) is shaped to provide a semi-circular cross-section groove.

10. The tank according to the preceding claim, comprising pipes (24) accommodated in the channels (18) formed by two of said grooves facing each other, the pipes (24) being advantageously brazed to the walls of the channels.

11. The tank according to one of the preceding claims, comprising means (27) for feeding hydrogen within the compartments, for example formed by porous pipes.

12. The tank according to one of claims 1 to 11, wherein notches are made in the transverse partition walls (12).

13. The tank according to one of claims 1 to 12, wherein the height accounts for 50 to 110% of the length and 50 to 110% of the width.

14. A hydrogen storage tank comprising a tank according to one of the preceding claims and a hydrogen storage material (6) provided in compartments (8), the material being advantageously put in the compartments as an ingot.

15. The storage tank according to claim 14, wherein a free volume (25) accounting for 12% to 60% of the volume of the compartment (8) is provided in each compartment (8).

16. The tank according to claims 14 or 15, wherein the hydrogen storage material (6) consists of at least one AₘBₙ type material consisting of an element A forming a stable hydride such as alkaline or alkaline earth metals like lithium, calcium or magnesium, fourth or fifth column transition metals like zirconium, titanium or metal rare earth like lanthanum, cerium and of an element B forming an unstable hydride under the standard conditions, such as most transition metals like chromium, cobalt, nickel or iron.

17. A method for making a tank according to one of claims 14 to 16, comprising the steps of:
a) cutting a metal strip to the desired dimensions,
a) folding said strips so as to form longitudinal channels bounded by longitudinal partition walls,
c) mounting the transverse partition walls to bound compartments with the longitudinal partition walls,
d) stacking thus formed elements and filling with the hydrogen storage material,
e) placing into an enclosure,
f) introducing hydrogen in the enclosure whereby the material(s) in each of the compartments is (are) transformed into metal hydride.

18. The making method according to the preceding claim, comprising prior to step d), a step c') during which two elements are attached one to the other through their face opposite to that carrying the partition walls, thus making subassemblies, and during step d), said subassemblies are stacked.

19. The making method according to the preceding claim, wherein, during step c'), pipes of the heat exchange system are provided between both elements, wherein said pipes can be brazed to each element.
